(19) Europäisches Patentamt
European Patent Office
Office européen des brevets

(11) Veröffentlichungsnummer: **0 669 356 A1**

# (12) EUROPÄISCHE PATENTANMELDUNG

(21) Anmeldenummer: **95102475.1**

(22) Anmeldetag: **22.02.95**

(51) Int. Cl.[6]: **C08G 18/83**, C08F 283/00

(30) Priorität: **28.02.94 DE 4406547**

(43) Veröffentlichungstag der Anmeldung: **30.08.95 Patentblatt 95/35**

(84) Benannte Vertragsstaaten: **AT BE DE ES FR GB GR IT NL PT SE**

(71) Anmelder: **Herberts Gesellschaft mit beschränkter Haftung**
**Christbusch 25**
**D-42285 Wuppertal (DE)**

(72) Erfinder: **Vogt-Birnbrich, Bettina, Dr.**
**Untenitter 3**
**D-42719 Solingen (DE)**
Erfinder: **Patzschke, Hans-Peter, Dr.**
**Am Heckendorn 71**
**D-42279 Wuppertal (DE)**
Erfinder: **Lenhard, Werner, Dr.**
**Roseggerstr. 1**
**D-42289 Wuppertal (DE)**
Erfinder: **Döbert, Jürgen**
**Gevelsberger Str. 149b**
**D-45549 Sprockhövel (DE)**
Erfinder: **Brunner, Marcus**
**Buchenstr. 12**
**D-42283 Wuppertal (DE)**
Erfinder: **Schubert, Walter, Dr.**
**Unterdahl 22**
**D-42349 Wuppertal (DE)**

(74) Vertreter: **Türk, Gille, Hrabal, Leifert**
**Brucknerstrasse 20**
**D-40593 Düsseldorf (DE)**

## (54) Wässrige Polyurethanharzdispersion, deren Herstellung und hierzu geeignete Polyurethanmakromere, und ihre Verwendung in wässrigen Überzugsmitteln.

(57) Beschrieben werden wäßrige Dispersionen von Polyurethanharzen, deren Herstellung, und Verwendung in wäßrigen Überzugsmitteln, erhältlich in wäßriger oder nicht-wäßriger Phase aus

a) Polyurethanharzen, mit mindestens einer CH-aciden Gruppe, ionischen oder nicht-ionischen hydrophilen Gruppe, und gegebenenfalls OH- und/oder NH-Gruppen, durch

b) Einführung von olefinischen Doppelbindungen durch Umsetzung mit

$b_1$) Verbindungen mit einer CH-aciden Gruppe und einer olefinischen Doppelbindung, und/oder

$b_2$) Verbindungen mit einer olefinischen Doppelbindung sowie einer mit CH-aciden Gruppen reaktionsfähigen Gruppe und/oder

$b_3$) Verbindungen mit einer olefinischen Doppelbindung sowie einer Gruppe, die mit -OH oder -NH reaktionsfähig ist, oder

$b_4$) Formaldehyd,

worauf gegebenenfalls in die wäßrige Phase überführt und radikalisch polymerisiert wird.

EP 0 669 356 A1

Die Erfindung betrifft eine wäßrige Dispersion von modifizierten Polyurethan-(PU)-harzen, die zur Herstellung wasserverdünnbarer Überzugsmittel, insbesondere für die Erzeugung von Basisschichten in Mehrschichtdecküberzügen geeignet ist. Sie betrifft auch die Herstellung der Dispersion der Polyurethanharze, die polymerisierte ungesättigte Monomere enthalten, sowie deren Verwendung. Die Erfindung betrifft auch Polyurethanmakromonomere, die zur Herstellung der modifizierten Polyurethanharze verwendet werden können.

Insbesondere bei der Automobillackierung aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen. Hierbei wird im allgemeinen zunächst eine Grundierung, z.B. eine Korrosionsschutzschicht aufgetragen, gegebenenfalls Zwischenschichten, sowie dann ein farbiges Überzugsmittel und anschließend ein transparenter Klarlack aufgebracht. In der farbigen Basisschicht werden metallische Pigmente oder Buntpigmente verwendet, die Metallic-Lackierungen oder Uni-Lackierungen ergeben. Dabei können Überzugsmittel verwendet werden, die bei erhöhten Temperaturen vernetzen oder auch solche, die bei Temperaturen unter 100 °C trocknen oder vernetzen.

Dabei wurden früher in der Automobillackierung Überzugsmittel verwendet, die einen hohen Gehalt an organischen Lösungsmittel enthalten. Zur Verringerung der Umweltbelastung ist man bemüht organische Lösungsmittel in Überzugsmitteln so weit wie möglich zu vermeiden.

Überzugsmittel, die als Lösungs- oder Dispergiermittel überwiegend Wasser und organische Lösungsmittel nur noch in geringen Mengen enthalten, sind bekannt. Ebenso ist der Einsatz von Polyurethandispersionen (PU-Dispersionen) in Basislacken bekannt. So werden in der EP-A-0 089 497 Metallic-Basislacke beschrieben, die wäßrige PU-Dispersionen als Bindemittel enthalten. Diese Bindemittel enthalten ionische Gruppen im Molekül. Sie entstehen durch Synthese eines NCO-haltigen Prepolymeren, das in wäßriger Dispersion mit Diaminen kettenverlängert wird.

In der DE-OS 26 63 307 und in der DE-OS 19 53 348 wird die Emulsionspolymerisation von Vinylmonomeren in Polyurethan-Dispersionen auf Basis von OH-haltigen ionische Gruppen enthaltenden Polyestern beschrieben, die zur Herstellung von Filmen dienen. Bei den Vinylmonomeren handelt es sich um Acrylatester oder Styrol, die auch funktionelle Gruppen enthalten können.

In der US-A-4 318 833 werden zur Herstellung von Metallic-Decklacken wäßrige, stark lösemittelhaltige Dispersionen von Carboxylgruppen enthaltenden Polyurethanen mit niedriger Molmasse mit ethylenisch ungesättigten Monomeren umgesetzt. Die entstehenden Lacke weisen eine unzureichende Wasserbeständigkeit auf. Außerdem sind die Mengen an organischen Lösungsmitteln unerwünscht.

Bei der Herstellung der in den vorstehenden Literaturstellen beschriebenen PU-Dispersionen erfolgt die Kettenverlängerung von Prepolymeren ausschließlich über die Bildung von C-N oder C-O Bindungen. Es sind keine CH-aciden Gruppen oder olefinischen Gruppen vorhanden.

In der DE-A-4 122 266 werden Polyurethandispersionen mit endständigen Doppelbindungen beschrieben, die mit ungesättigten Monomeren polymerisiert werden können. Dabei werden die Doppelbindungen in NCO-terminierte PU-Prepolymere über OH, SH oder NH-funktionelle ungesättigte Monomere einreagiert. Eine Kettenverlängerung in der Wasserphase wird nicht durchgeführt.

Bekannt sind aus der EP-A-0 367 051 wäßrige PU-Dispersionen, die einreagierte Carbonylgruppen tragen sowie Carboxylgruppen. Diese funktionalisierten Polyurethane werden als wäßrige Dispersion eingesetzt. Im getrockneten Film findet eine Vernetzung über die Carbonylgruppe mit Polyhydraziden unter Ausbildung einer C-N-Bindung statt.

In der noch nicht offengelegten DE-Patentanmeldung 42 28 851 der gleichen Anmelderin werden wäßrige PU-Dispersionen beschrieben, bei denen eine Kettenverlängerung der Bausteine durch Umsetzung von CH-aciden- Gruppen durchgeführt wird. In beiden Literaturstellen werden jedoch keine weiteren Modifikationen der PU-Polymeren beschrieben.

Die bekannten wäßrigen Überzugsmittel, die PU-Dispersionen enthalten, erfüllen nicht alle gestiegenen Anforderungen. Sie haben Nachteile in der Haftung zu den weiteren Schichten von Mehrschichtlackierungen. Besonders treten Probleme in der Schwitzwasserbeständigkeit auf, d.h. bei einer Belastung unter erhöhter Temperatur und Luftfeuchtigkeit ist eine Enthaftung oder Blasenbildung zu beobachten. Ein weiterer Nachteil derartiger Dispersionen ist ihr Gehalt an organischen Lösemittel. Außerdem ist die Verträglichkeit mit zusätzlichen Bindemitteln im Überzugsmittel häufig problematisch, so daß die Lagerstabilität dabei herabgesetzt wird.

Aufgabe der vorliegenden Erfindung ist die Bereitstellung einer lösemittelarmen ionisch und/oder nichtionisch stabilisierten Polyurethan-Dispersion, die hydrolysestabil ist und eine gute Lagerstabilität aufweist. Sie soll eine gute Verträglichkeit mit weiteren Bindemitteln aufweisen und für wasserverdünnbare Überzugsmittel verwendbar sein, die sich durch gute Zwischenschichthaftung bei Mehrschichtlackierung auszeichnen, gute Metallic-Effekte ergeben und außerdem gegen Chemikalien stabil sind. Die Polyurethane sollen selbst

bei hohen Molmassen keine Viskositätsschwierigkeiten bei der Herstellung und Handhabung ergeben.

Diese Aufgabe wird durch eine wäßrige Dispersion von Polyurethanharzen, die ungesättigte Monomere einpolymerisiert enthalten können, gelöst, die erhältlich ist aus

a) einem oder mehreren Polyurethanharzen, die mindestens eine CH-acide Gruppe, mindestens eine ionische Gruppe, in eine ionische Gruppe überführbare Gruppe und/oder nicht-ionische hydrophile Gruppe, sowie gegebenenfalls OH- und/oder NH-Gruppen enthalten, durch

b) Einführung von einer oder mehreren olefinischen Doppelbindungen durch Umsetzung mit

$b_1$) einer oder mehreren Verbindungen, die eine CH-acide Gruppe und eine olefinische Doppelbindung enthalten mit der allgemeinen Formel

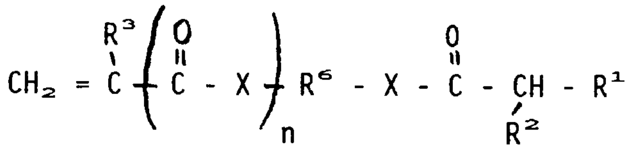 VI.

n = 0 oder 1,
X = 0 oder NH, wobei die Gruppen X gleich oder verschieden sein können,
$R^1$ = H, $C_1$ - $C_6$-Alkyl, -$COOR^3$,
$R^2$ = -CN, -$COOR^3$, -$CONR^3_2$,

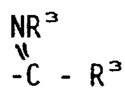

$R^3$ = H, lineares oder verzweigtes $C_1$ - $C_8$-Alkyl, wobei die Reste $R^3$ gleich oder verschieden sein können,
$R^6$ = Alkylen, Cycloalkylen, Arylen oder Alkylarylen, insbesondere mit $C_1$ bis $C_{12}$,
und/oder

$b_2$) einer oder mehreren Verbindungen, die eine olefinische Doppelbindung sowie eine mit CH-aciden Gruppen reaktionsfähige Gruppe enthalten mit der allgemeinen Formel VII

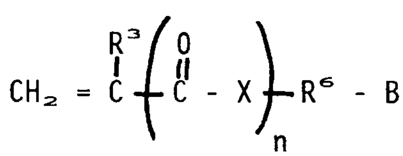 VII.

n = 0 oder 1
B = NCO, CHO, $CH(OR)_2$,

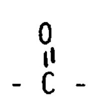

$R^6$, X, $R^3$ = wie unter $b_1$) definiert,
R = Alkyl mit $C_1$ bis $C_6$,
und/oder

$b_3$) einer oder mehreren Verbindungen, die eine olefinische Doppelbindung sowie eine Gruppe, die mit -OH oder -NH Gruppen reaktionsfähig ist, enthalten, mit der allgemeinen Formel VIII

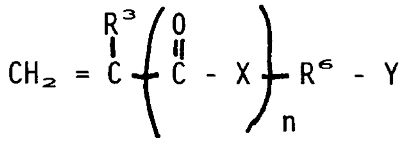

VIII

mit n, $R^3$, X, $R^6$ = wie unter $b_1$) definiert und
Y = Isocyanat oder Epoxidgruppe,
und/oder
$b_4$) Formaldehyd,
in wäßriger oder nicht-wäßriger Phase worauf ein noch nicht in wäßriger Phase vorliegendes Reaktionsprodukt von a) und b) in die wäßrige Phase überführt und in der wäßrigen Phase radikalisch polymerisiert wird,
gegebenenfalls zusammen mit einem oder mehreren radikalisch polymerisierbaren ungesättigten Monomeren, gebenenfalls in Anwesenheit von üblichen Additiven.

Die Erfindung betrifft auch ein Verfahren zur Herstellung dieser wäßrigen Dispersionen von Polyurethanharzen, das gekennzeichnet ist durch Umsetzung in wäßriger oder nicht-wäßriger Phase von

a) einem oder mehreren Polyurethanharzen, die mindestens eine CH-acide Gruppe, mindestens eine ionische Gruppe, in eine ionische Gruppe überführbare Gruppe und/oder nicht-ionische hydrophile Gruppe, sowie gegebenenfalls OH- und/oder NH-Gruppen enthalten, zur Einführung von einer oder mehreren olefinischen Doppelbindungen mit
$b_1$) einer oder mehreren Verbindungen, die eine CH-acide Gruppe und eine olefinische Doppelbindung, wie vorstehend definiert, enthalten und/oder
$b_2$) einer oder mehreren Verbindungen, die eine olefinische Doppelbindung sowie eine mit CH-aciden Gruppen reaktionsfähige Gruppe, wie vorstehend definiert, enthalten und/oder
$b_3$) einer oder mehreren Verbindungen, die eine olefinische Doppelbindung sowie eine Gruppe, die mit -OH oder -NH Gruppen reaktionsfähig ist, wie vorstehend definiert, enthalten und/oder
$b_4$) Formaldehyd,
worauf ein noch nicht in wäßriger Phase vorliegendes Reaktionsprodukt von a) und b) in die wäßrige Phase überführt und in der wäßrigen Phase radikalisch polymerisiert wird, gegebenenfalls zusammen mit einem oder mehreren radikalisch polymerisierbaren ungesättigten Monomeren, gegebenenfalls in Anwesenheit von üblichen Additiven.

Gemäß einer bevorzugten Ausführungsform der Erfindung können die Polyurethanharze a) vor oder während der Einführung der olefinischen Doppelbindungen zur Kettenverlängerung umgesetzt werden mit
c) mindestens einer Verbindung, die mit mindestens zwei CH-aciden Gruppen reagieren kann.

Bei den in den erfindungsgemäßen Dispersionen enthaltenen Polyurethanharzen kann es sich bei radikalischer Polymerisation ohne Zusatz von weiteren Monomeren um "Homopolymerisate" handeln. Entsprechende "Copolymerisate" werden erhalten, wenn die radikalische Polymerisation in Anwesenheit von einem oder mehreren copolymerisierbaren ungesättigten Monomeren durchgeführt wird.

Einen weiteren Gegenstand der Erfindung bilden die durch Umsetzung der Komponenten a), b) und gegebenenfalls c), wie vorstehend beschrieben, ohne weitere Reaktion mit radikalisch polymerisierbaren ungesättigten Monomeren erhaltenen Polyurethanmakromonomere. Diese können als solche, oder in wäßriger Phase vorliegen. Diese Polyurethanmakromonomeren können für weitere Umsetzungen zur Herstellung von Homopolymeren oder Copolymeren verwendet werden. Die Polyurethanmakromonomeren können als solche oder in wäßriger Dispersion auch als Bindemittel für Überzugsmittel eingesetzt werden. Diese Bindemittel sind reaktive Bindemittel und können beispielsweise durch energiereiche Strahlung, wie UV-Strahlung oder durch Michael-Reaktion gehärtet werden.

Die erfindungsgemäße wäßrige Dispersion kann im Prinzip in zwei Reaktionsschritten hergestellt werden. Zuerst werden Polyurethanharze synthetisiert, die mindestens eine CH-acide Gruppe enthalten.

Zu den PU-Harzen werden Substanzen b) gefügt, die vor oder während der Reaktion von a) und c) olefinische Doppelbindungen in die Polyurethanharze einführen. Es kann sich um Verbindungen handeln, die olefinische Doppelbindungen enthalten, sowie CH-acide oder mit CH-aciden Gruppen oder den gegebenenfalls vorhandenen OH- oder NH-Gruppen reagierende funktionelle Gruppen aufweisen oder die Doppelbindungen an CH-aciden Gruppen erzeugen können. Zu der erhaltenen Mischung oder dem erhaltenen Reaktionsprodukt können dann zur Kettenver längerung Verbindungen c) gegeben werden, die mindestens difunktionell mit CH-aciden Gruppen reagieren können. Vor oder nach Überführung des aus a), b) und gegebenenfalls c) erhaltenen Reaktionsprodukts in die Wasserphase werden ungesättigte radikalisch

polymerisierbare Monomere zugegeben, sowie Starter und gegebenenfalls Regler und/oder Additive, und eine Polymerisation wird danach in der Wasserphase durchgeführt.

Die Synthese von Umsetzungsprodukten von Polyurethanharzen, die CH-acide Gruppen enthalten, sowie mindestens difunktionellen Verbindungen, die mit CH-aciden Gruppen reagieren können, sind in der noch nicht veröffentlichten DE-Patentanmeldung P 42 28 510 der gleichen Anmelderin beschrieben. Die Synthese der dafür geeigneten Polyurethanharzvorstufen ist bekannt. Sie kann in weiten Grenzen variiert werden.

Beispielsweise ist es möglich, derartige CH-acide Gruppen enthaltende Polyurethanharze zu verwenden, deren Herstellung in der EP-A-0 367 051 beschrieben wird.

Ihre Herstellung kan z.B. erfolgen durch Umsetzung von

- einem oder mehreren organischen Polyisocyanaten mit
- einer oder mehreren Verbindungen mit mehr als einer mit Isocyanat reaktiven Gruppen und mindestens einer ionischen Gruppe, zur Ionenbildung befähigte Gruppe und/oder hydrophilen Gruppe,
- gegebenenfalls einem oder mehreren Kettenverlängerern und
- gegebenenfalls einer oder mehreren Polyhydroxylverbindungen
- einem oder mehreren Mono- und/oder Polyalkoholen, der mindestens eine CH-acide Gruppe enthält.

Ein weiterer, bevorzugter Weg zur Herstellung eines Polyurethanharzes, das mindestens eine CH-acide Gruppe enthält, verläuft beispielsweise durch Umsetzung von:

A) mindestens einem Hydroxylgruppen enthaltenden Polyurethanharz, das Harnstoffgruppierungen enthalten kann, mit mindestens einer ionischen Gruppe, zur Ionenbildung befähigten Gruppe und/oder hydrophilen Gruppe pro Molekül und einer OH-Zahl von 10 bis 150, bevorzugt unter 100, in wasserfreiem Milieu, mit

B) mindestens einer Verbindung, die mindestens eine, zur Reaktion mit mindestens einem Teil der OH-Gruppen des Polyurethanharzes geeignete funktionelle Gruppe aufweist und darüber hinaus eine CH-acide Gruppe oder eine Vorstufe davon enthält.

Diese PU-Harze weisen beispielsweise eine Molmasse von 2500 bis 1000000 auf, insbesondere von 5000 bis 100000. Unter Molmasse wird hier und in der folgenden Beschreibung die zahlenmittleren Molmasse (Mn) verstanden.

Ein OH-Gruppen enthaltendes Polyurethanharz A) kann nach bekannten Verfahren hergestellt werden, z.B. aus

- linearen oder verzweigten Verbindungen, mit mindestens zwei gegenüber Isocyanat reaktiven Gruppen
- organischen Polyisocyanaten, insbesondere Diisocyanaten,
- Verbindungen mit mehr als einer mit Isocyanat reaktiven Gruppe, und mindestens einer ionischen Gruppe, zur Ionenbildung befähigten Gruppe und/oder hydrophilen Gruppe.

Wird dabei ein NCO-Überschuß angewendet, kann das Reaktionsprodukt z.B. mit Aminopolyolen zu OH-Polyurethanen umgesetzt werden.

Solche OH-Polyurethane sind beispielsweise in der DE-A-39 03 804 oder der EP-A-0 469 389 beschrieben.

Das Hydroxylgruppen enthaltende Polyurethanharz der Komponente A) weist bevorzugt einen Gehalt von Urethan-(NHCOO-) und gegebenenfalls Harnstoff-(-NHCONH-)Gruppen zwischen 10 und 300 Milliäquivalenten pro 100 g Festharz auf.

OH-haltige Polyurethanharze können dann mit Substanzen B) umgesetzt werden, die CH-acide Gruppen sowie weitere reaktive Gruppen aufweisen. Das durch Umsetzung der Komponente A) und B) erhaltene Polyurethanharz weist z.B. über Esterfunktionen gebundene Reste mit CH-aciden Gruppen auf. Die folgende Formel stellt ein Beispiel für ein solches Harz dar.

$$P - ( - O - \overset{\overset{O}{\|}}{C} - \underset{\underset{R^1}{|}}{CH} - R^2)_n \qquad (I)$$

mit $R^1$ = H, $C_1$ - $C_6$-Alkyl, $-COOR^3$
$R^2$ = -CN, $-COOR^3$, $-CONR^3{}_2$,

$$-\overset{\overset{\displaystyle NR^3}{/\!/}}{C}-R^3$$

$R^3$ = H, lineares oder verzweigtes $C_1$ - $C_8$-Alkyl, wobei die Reste $R^3$ gleich oder verschieden sein können,
P = Polyurethan/Polyharnstoffpolymer
n = 2 bis 5 (= Anzahl der am Gerüst P vorhandenen Esterfunkionen mit CH-aciden Gruppen)
Die Darstellung der Polyurethanharze kann ohne organische Lösemittel durchgeführt werden.

Als Polyolkomponente bei der Polyurethanherstellung können beispielsweise bekannte Polyetherpolyole, Polyesterpolyole, Polycarbonatdiole, Polyesterpolyole die sich von Lactonen ableiten, Polybutadienöldiole oder alpha,omega-Polysiloxandiole, eingesetzt werden. Dabei liegt die Molmasse beispielsweise bei 300 bis 4000. Bevorzugt werden lineare Diole eingesetzt.

Gegebenenfalls können niedermolekulare Komponenten anteilsweise zu den höhermolekularen Komponenten zugesetzt werden. Es handelt sich beispielsweise um niedermolekulare Alkohole oder Amine. Es kommen sowohl difunktionelle Verbindungen als auch mindestens trifunktionelle Verbindungen oder Gemische derartiger Verbindungen in Betracht. Als Isocyanat für die Herstellung der Polyurethandispersionen können beliebige organische Polyisocyanate z.B. Diisocyanate eingesetzt werden. Diese sind in der Lackchemie weitgehend bekannt. Es können bekannte aliphatische oder aromatische gehinderte Isocyanate eingesetzt werden, wie sie dem Fachmann geläufig sind und wie sie beispielsweise auch in der deutschen Patentanmeldung P 42 28 510 beschrieben werden.

Zur Herstellung der Polyurethane werden weiterhin niedermolekulare Verbindungen verwendet die mindestens zwei mit Isocyanat reagierende Gruppen sowie mindestens eine ionische Gruppe, in eine ionische Gruppe überführbare und/oder hydrophile Gruppen enthalten. Bevorzugt sind anionische oder anionenbildende Gruppen, insbesondere Carboxylgruppen. Die Verfahrensweise dafür ist bekannt. Es können auch saure Polyester, wie sie in der DE-A-39 03 804 beschrieben sind, eingesetzt werden.

Die anionischen, kationischen oder nicht-ionischen hydrophilen Gruppen dienen zur Stabilisierung der wäßrigen Dispersion. Es können auch ionische und nicht-ionische Gruppen gemeinsam eingesetzt werden. Bevorzugt ist die Stabilisierung durch ionische Gruppen.

Die Mengen bei der Herstellung von A werden so gewählt, daß bei der Umsetzung ein Umsetzungsprodukt mit endständigen bevorzugt primären OH-Gruppen entsteht, d.h. es wird bevorzugt mit einem Polyolüberschuß gearbeitet. Die Komponente A) wird mit Hilfe Komponente B) in ein Polyurethanharz überführt, das CH-acide Gruppen aufweist. Auf diesem Wege werden CH-acide Gruppen in das Polyurethan eingeführt. Die entstehenden Produkte können je nach Wahl der Komponente B) bevorzugt endständig beispielsweise folgende Gruppen aufweisen:

$$-O-\overset{\overset{O}{\|}}{C}-CHR^1-\overset{\overset{O}{\|}}{C}-CH_3 \qquad II.$$

$$-O-\overset{\overset{O}{\|}}{C}-CHR^1-\overset{\overset{O}{\|}}{C}-OR^7 \qquad III.$$

$$-O-\overset{\overset{O}{\|}}{C}-CHR^1-CN \qquad IV.$$

$$-O-\overset{\overset{O}{\|}}{C}-CHR^1-\overset{\overset{O}{\|}}{C}-NR_2^7 \qquad V.$$

worin $R^1$ wie vorstehend durch die allgemeine Formel (I) definiert und $R^7$ = $C_1$ - $C_8$-Alkyl, linear oder verzweigt ist, wobei, falls mehrere Reste $R^1$ oder $R^7$ vorliegen, diese gleich oder verschieden sein können.

Die Synthese kann auf verschiedene in der Literatur bekannte Weisen erfolgen.

Erfindungsgemäß werden in das Polyurethanharz olefinische Doppelbindungen einreagiert zu einem ungesättigte Gruppen enthaltenden Makromonomer. Das kann durch Verbindungen $b_1$), $b_2$), $b_3$) bzw. $b_4$) geschehen. Werden Verbindungen vom Typ $b_1$) eingesetzt so werden diese über das Kettenverlängerungsmittel eingeführt; dazu wird die Menge der zur Kettenverlängerung notwendigen Substanzen c) so gewählt, daß die Verbindungen $b_1$) mit den aktivierten ungesättigten Doppelbindungen in das Polyurethanharz einreagieren können.

Werden Verbindungen vom Typ $b_2$) eingesetzt, die zusätzlich zu der ungesättigten Doppelbindung mit CH-aciden Gruppen reagierenden Gruppen aufweisen, wird die Menge so gewählt, daß die aciden Gruppen im Makromonomeren ausreichen, um die Reaktion mit der Komponente c) sicherzustellen, sowie eine ausreichende Umsetzung mit den reaktiven Gruppen der Komponente $b_2$) zu ermöglichen. Es ist jedoch auch möglich über $b_2$) eine Kettenverlängerung zu erreichen, wenn $b_2$) difunktionell ist. Dabei ist dann eine getrennte Reaktion mit c) nicht notwendig.

Ebenso kann auf dieser Reaktionsstufe mit vorhandenen OH- oder NH-Gruppen des Polyurethanharzes eine Reaktion mit Verbindungen vom Typ $b_3$) vorgenommen werden. Dabei werden die ungesättigten Doppelbindungen an die seitenständigen Hydroxyl oder Aminogruppen des Polyurethanharzes einreagiert. Eine Kettenverlängerung über die CH-aciden Komponenten wird dabei nicht beeinflußt.

Wird Formaldehyd als $b_4$) eingesetzt, entstehen durch Reaktion Knoevenagel-Reaktion mit CH-aciden Zentren Doppelbindungen. Über die Menge an $b_4$) wird die Anzahl der olefinischen Bindungen gesteuert. Liegt molar betrachtet ein Unterschuß von Formaldehyd zu CH-aciden Gruppen vor, so muß über c) weiter kettenverlängert werden. Werden Mengen weniger als zweimolar eingesetzt, tritt gleichzeitig zur Synthese der Doppelbindungen eine Kettenverlängerung auf. Die separate Umsetzung mit c) ist dann nicht notwendig.

Es ist auf alle Fälle sicherzustellen, daß eine ausreichende Menge von olefinisch ungesättigten Doppelbindungen im Polyurethanmakromonomeren erhalten wird, die Menge soll 0,3 mMo1 bis 5 mMo1 pro g/Harz betragen.

Die Umsetzung zum Makromonomer kann in wasserfreiem Medium erfolgen, z.B. durch Umsetzung von Verbindungen vom $b_3$) oder sie kann auch in der Nasserphase erfolgen, insbesondere bei Umsetzung mit den Komponenten $b_1$) und $b_2$). Reaktionen mit $b_4$) können sowohl in der organischen Phase, wie auch in der Nasserphase stattfinden.

Als Komponente $b_1$) sind Verbindungen geeignet mit der allgemeinen Formel:

$$CH_2 = \overset{R^3}{\overset{|}{C}} - \left( \overset{O}{\overset{\|}{C}} - X \right)_n - R^6 - X - \overset{O}{\overset{\|}{C}} - \underset{R^2}{\underset{|}{CH}} - R^1 \qquad VI.$$

n = 0 oder 1,

x = 0 oder NH, wobei die Gruppen X gleich oder verschieden sein können, $R^1$, $R^2$, $R^3$ wie unter I definiert

$R^6$ = Alkylen, Cycloalkylen, Arylen oder Alkylarylen insbesondere mit $C_1$ bis $C_{12}$.

Es handelt sich hierbei z.B. um Reaktionsprodukte der Umsetzung von Acetessigester, oder Diketen mit hydroxyfunktionellen Monomeren wie sie im folgenden beschrieben sind. Besonders bevorzugt handelt es sich um Acetoacetoxyethyl(meth)acrylat und Diacetonacrylamid.

Als Verbindungen $b_2$) sind Verbindungen geeignet der allgemeinen Formel:

$$CH_2 = \overset{R^3}{\overset{|}{C}} - \left( \overset{O}{\overset{\|}{C}} - X \right)_n - R^6 - B \qquad VII.$$

n = 0 oder 1

B = NCO, CHO, $CH(OR)_2$,

$$-\overset{O}{\overset{\|}{C}}-$$

$R^6$, X, $R^3$ = wie oben definiert

Bei den isocyanatfunktionellen Verbindungen des allgemeinen Typs VII handelt es sich beispielsweise um Umsetzungsprodukte von hydroxyfunktionellen ungesättigten Monomeren mit einem Überschuß von Di- und Polyisocyanaten, wie z.B. Hydroxyethyl(meth)acrylat und Isophorondiisocyanat. Daneben können beispielsweise auch andere ungesättigte Isocyanate wie Isocyanatethyl(meth)acrylat, (Meth)acrylarylisocyanat und meta-Isopropenyldimethylbenylisocyanat eingesetzt werden.

Beispiele für ungesättigte Monomere mit Aldehyd-, Acetal-, oder Ketogruppen sind Acrolein, Methacrolein, Vinylalkylketone mit 1 bis 20, vorzugsweise 1 bis 10 Kohlenstoffatomen im Alkylrest, Formylstyrol, (Meth)acrylsäurealkylester mit einer Aldehyd- oder Ketogruppe im Alkylrest, vorzugsweise 3 bis 10 Kohlenstoffatome umfaßt, wie z.B. (Meth)acryloxyalkylpropanal, wobei (Meth)-acrylamidobutyraldehyddimethylacetal oder der entsprechende freie Aldehyd besonders geeignet sind.

Als Substanzen $b_3$) sind Verbindungen geeignet, die eine ungesättigte Doppelbindung sowie eine mit NH- oder OH-Gruppen reagierende funktionelle Gruppe aufweisen. Beispiele dafür sind Verbindungen der allgemeinen Formel:

$$CH_2 = \overset{R^3}{\overset{|}{C}} \left( \overset{O}{\overset{\|}{C}} - X \right)_n R^6 - Y \qquad VIII.$$

mit n, $R^3$, X, $R^6$ = wie vorstehend definiert und

Y = Isocyanat oder Epoxidgruppe.

Bevorzugt sind glycidylfunktionelle ungesättigte Monomere, insbesondere Glycidyl(meth)acrylat.

Die Umsetzung des Polyurethans a) mit der Komponente b) kann je nach Auswahl von b) in An- oder Abwesenheit der wahlfreien Komponente c) erfolgen.

Vor oder nach der Umsetzung der Komponenten b) und gegebenenfalls c) mit dem Polyurethan a) können olefinisch ungesättigte Monomere d) zugesetzt werden. Diese Monomere sollen keine mit CH-aciden Gruppen reaktive Zentren aufweisen, sie liegen im wesentlichen inert vor und sollen eine Umsetzung von b) nicht stören. Eine Polymerisation soll zu diesem Zeitpunkt noch nicht stattfinden.

Die Monomere d) können vor, während oder nach der Dispersionsherstellung zugegeben werden. Die Monomere können beispielsweise in derartigen Anteilen zugegeben werden, daß in dem resultierenden Polyurethan-Acrylharz der Anteil an Polyurethanharz-Einheiten zu Acrylharz-Einheiten 100 : 0 bis 30 : 70, bezogen auf das Festkörpergewicht beträgt. Beträgt der Anteil an Acrylharz 0 Gew.-%, so liegt ein Homopolymer aus den Polyurethanmakromonomeren vor.

Zur weiteren Synthese bzw. Kettenverlängerung der Polyurethandispersionen unter Funktionalisierung mit ungesättigten Gruppen sind Verbindungen c) geeignet, die mit CH-aciden Zentren reagieren können. Dabei entstehen Makromere mit ungesättigten polymerisierbaren Gruppen. Dabei muß mindestens eine 2-fache Reaktionsmöglichkeit der Komponente c) gegeben sein. Beispiele für die Komponente c) sind Aldehyde und Polyisocyanate mit mindestens zwei Isocyanatgruppen. Spezielle Beispiele sind:

1. Aromatische, aliphatische oder cycloaliphatische Aldehyde, die monomer oder polymer vorliegen können, wie Formaldehyd, Acetaldehyd, Glyoxal, Glutardialdehyd, Paraformaldehyd, Propionaldehyd, Butyraldehyd, Isobutyraldehyd, 2-Methylpentenal, Furfural oder Acrolein.
2. Aromatische, aliphatische oder cycloaliphatische Polyisocyanate, wie sie z.B. in der Lackchemie üblich sind. Neben den bekannten z.B. auch bei der Polyurethansynthese A) geeigneten Diisocyanaten können auch NCO-haltige Prepolymere oder höherfunktionelle Isocyanate (mit einer NCO-Funktionalität von über 2 eingesetzt werden. Das sind z.B. Isocyanate vom Biuret- oder Isocyanurattyp. Es kann sich sowohl um niedermolekulare und hochmolekulare Substanzen handeln. Weitere aliphatische Polyisocyanate können beispielsweise durch selektive Reaktion silylierter Polyalkohole mit Isocyanatcarbonsäurechloriden hergestellt werden. Beispiele für solche estergruppenhaltige Polyisocyanate sind solche auf der Basis von Hexandiisocyanat und Pentaerythrit.

Zusätzlich zu Komponente c) können gegebenenfalls niedermolekulare Verbindungen mit einem Molekulargewicht unter 1000 zugesetzt werden, die mindestens 2 bevorzugt 3 bis 5 CH-acide Gruppen tragen. Diese können also zu einer Verzweigung des Produktes führen. Beispielsweise handelt es sich dabei um Verbindungen der Formel IX.

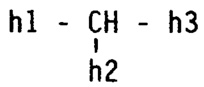

IX.

mit h1 ausgewählt aus

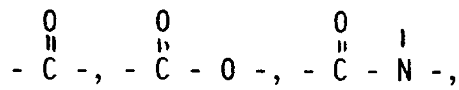

- CN, $-NO_2$
mit h2 ausgewählt aus

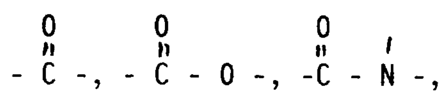

-CN
mit h3 ausgewählt aus

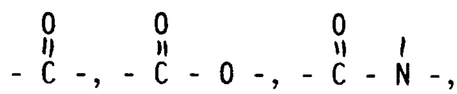

- H, Alkyl, Alkylen wobei die durch die vorstehenden Reste h1, h2, h3 definierten Carboxyl- oder Carbonamid-Gruppen jeweils über das Kohlenstoffatom an die CH-Gruppe gebunden sind und die CH-Gruppe gegebenenfalls über mindestens einen der Reste h1, h2 und/oder h3 an eine oligomere Einheit gebunden ist.

Die geeigneten Kettenverlängerungsreagenzien c) können einzeln oder in Kombination eingesetzt werden. Die Kettenverlängerung kann zumindest auch zum Teil schon vor der Überführung in die Wasserphase erfolgen, bevorzugt wird sie jedoch in der Wasserphase durchgeführt. Gegebenenfalls kann die Reaktion zur Beschleunigung auf leicht erhöhte Temperaturen erwärmt werden.

Die Umsetzung der Komponenten zum Aufbau der PU-Makromeren erfolgt bevorzugt ohne Lösungsmittel, bevorzugt stufenweise nach bekannten Verfahren der organischen Chemie. Gegebenenfalls können aber auch die dem Fachmann geläufigen Lösungsmittel, die für die Polyurethansynthese geeignet sind, zugesetzt werden. Diese können gegebenenfalls später im Vakuum vor der Weiterverarbeitung abdestilliert werden. Geringe Mengen an zurückbleibenden Lösungsmittelresten stören in der fertigen Dispersion nicht. Werden ungesättigte Monomere d) in der Reaktionsmischung von a) mit b) eingesetzts, ist es im allgemeinen nicht notwendig organische Lösungsmittel vor der Kettenverlängerung zuzusetzen.

Unter Kettenverlängerung ist eine Erhöhung der Molmasse durch Verknüpfung von zwei- oder mehreren PU-Makromeren über die CH-aciden Gruppen unter Erhalt der ungesättigten Doppelbindungen zu verstehen.

Das Umsetzungsprodukt aus a), b) und gegebenenfalls c) wird in die Wasserphase überführt. Zur Überführung in die Wasserphase werden in ionische Gruppen überführbare Gruppen durch Neutralisation in die ionischen Gruppen umgewandelt. Zur Herstellung anionischer Gruppen werden saure Gruppen z.B. Carboxylgruppen, Phosphorsäuregruppen und Sulfonsäuregruppen, zumindest teilweise durch Basen, wie Amine und Ammoniak, die auf dem Gebiet anionischer Lacke üblich sind, neutralisiert. Zur Herstellung von kationischen Gruppen werden basische Gruppen, z. B. primäre, sekundäre und tertiäre Aminogruppen, mit

üblichen Säuren, insbesondere organischen Säuren, wie Ameisensäure, Essigsäure, Milchsäure, neutralisiert. Die Neutralisation kann ganz oder teilweise erfolgen. Die Neutralisation kann entweder vor der Wasserzugabe oder gleichzeitig mit der Wasserzugabe erfolgen. Ionische Gruppen, die in den PU-Harzen vorhanden sein können, sind z.B. Oniumgruppen, wie Ammonium-, Phosphonium- und tert.-Sulfoniumgruppen. Beispiele für nicht-ionische hydrophile Gruppen sind Polyetherketten mit eingebauten Ethylenoxideinheiten. Die Überführung der Polyurethanharze in die wäßrige Phase kann chargenmäßig erfolgen, d. h. beispielsweise durch Zusatz der einzelnen Bestandteile in einen Mischkessel, der mit Rührern ausgerüstet ist. Sie kann aber auch kontinuierlich erfolgen, hierzu kann man sich beispielsweise Emulgiermaschinen bedienen, in die sämtliche Bestandteile, Harz, Wasser und gegebenenfalls Zusätze, wie notwendige Neutralisationsmittel, eingeführt werden.

Nach der Überführung in die Wasserphase kann dann auch die Umsetzung mit c) zur Kettenverlängerung stattfinden, wenn eine Reaktion in organischer Phase nicht gewünscht wird oder nicht schon vorher stattgefunden hat. Bei der Kettenverlängerung werden dann auch die Verbindungen vom Typ $b_1$) mit in das PU-Molekül einreagiert. Die PU-Makromere in Dispersionsform aus den Komponenten a, b und c weisen bevorzugt eine Säurezahl von 5 bis 90 auf, besonders bevorzugt 10 bis 50. Das Zahlenmittel der Molmassen (Mn) der erfindungsgemäßen ungesättigten PU-Makromonomere beträgt beispielsweise zwischen 2500 und 1000000, bevorzugt zwischen 5000 und 50000. Sie sind im allgemeinen nicht vernetzt. Die OH-Zahl und die Aminzahl liegen bevorzugt zwischen 5 und 100. Die entstehenden erfindungsgemäßen ungesättigten funktionalisierten PU-Makromonomere bilden stabile Dispersionen. Sie können auch direkt in oxidativ oder strahlenhärtenden Überzugsmitteln oder Klebstoffen eingesetzt werden.

Wie oben beschrieben können bei dieser Reaktion die Monomere von d) schon vorhanden sein. Sie stören die Reaktion nicht. In der Wasserphase können ebenfalls nachträglich Verbindungen vom Typ d) zugesetzt werden, d.h. es werden Monomere mit radikalisch polymerisierbaren Doppelbindungen einemulgiert. Verfahren zum Einemulgieren von olefinisch ungesättigten Monomeren in Polymerdispersionen sind bekannt. Sie werden beispielsweise in der DE-A-37 22 005 beschrieben. Ebenso werden dort Beispiele für erfindungsgemäß geeigneten Monomere beschrieben.

Bei der Herstellung der erfindungsgemäßen PU-Makromer-Dispersionen, die das kettenverlängerte Polyurethan sowie die Monomere eindispergiert enthalten, können gegebenenfalls anionische und/oder nicht-ionische Emulgatoren zugegeben werden. Solche Herstellungsverfahren sind beispielsweise auch in der DE-A-23 63 307 beschrieben. Die dann anschließende Polymerisation kann beispielsweise bei erhöhter Temperatur, z. B. bei einer Temperatur von 30 bis 100 °C erfolgen.

Gegebenenfalls können auch höhere Temperaturen verwendet werden, insbesondere wenn dabei der Reaktionsdruck bis zu etwa 10 bar erhöht wird.

Als Komponente d) sind alle radikalisch polymerisierbaren Monomeren geeignet. Bevorzugt werden solche Monomere d) eingesetzt, die zu einem Copolymerisat führen, dessen Glasübergangstemperatur über der Glasübergangstemperatur des vorgelegten Polyurethanharzes liegt. Die Auswahl der ungesättigten Monomeren, die keine weiteren reaktiven Gruppen enthalten, erfolgt nach mechanischen und Verträglichkeitseigenschaften. Es werden beispielsweise Acrylsäurealkylester, Methacrylsäurealkylester, Maleinsäure- und/oder Fumarsäuredialkylester eingesetzt, wobei die Alkylester aus 1 bis 20 Kohlenstoffatomen bestehen und linear, verzweigt, aliphatisch, cycloaliphatisch und/oder (alkyl)aromatisch sind. Harte Monomere mit einer hohen Glasübergangstemperatur als Polymere sind beispielsweise Monomere vom Vinylaromatentyp wie Styrol, Methylstyrol, o-, m- und p-Alkylstyrole wie Vinyltoluol oder p-tert.-Butylstyrol, halogenierte Vinylbenzole, Methacrylsäureester mit kurzer Kette, wie Methylmethacrylat, Ethylmethacrylat, Propylmethacrylat, Butylmethacrylat, Cyclohexylmethacrylat, alkylsubstituierte Cyclohexyl(meth)acrylate, Isobornylmethacrylat, Dihydrodicyclopentadienylmethacrylat, (Meth)acrylamid und/oder auch (Meth)acrylnitril. Weiche Monomere sind dagegen Acrylsäureester mit einer langen Alkoholkette wie n-Butylacrylat, Isobutylacrylat, tert.-Butylacrylat, 2-Ethyl-hexylacrylat und/oder Laurylacrylat. Es können auch ungesättigte Ether wie Ethoxy-ethylmethacrylat oder Tetrahydrofurfurylacrylat eingesetzt werden. Monomere vom Vinylestertyp, vorzugsweise Vinylester verzweigter Monocarbonsäuren, besonders der Versaticsäurevinylester oder Pivalinsäurevinylester, können auch einpolymerisiert werden, wenn geeignete Reaktionsbedingungen und Reaktionsmonomere ausgewählt werden. Der Ausdruck (meth)acryl bedeutet hier acryl und/oder methacryl.

Gegebenenfalls ist es möglich, einpolymerisierbare Monomere zu verwenden, die funktionelle Gruppen enthalten. Dabei kann es sich um Hydroxylgruppen, Aminogruppen, Epoxidgruppen, Amidgruppen oder Carbonsäuregruppen handeln. Als carboxylgruppenhaltige Monomere werden bevorzugt Acrylsäure und Methacrylsäure eingesetzt.

Als aminogruppenhaltige Monomere können beispielsweise Monomere der allgemeinen Formel:

$R^3 - CH = CH - D - A - N(R^5)_2$

eingesetzt werden, wobei
$R^3$ = wie vorstehend definiert
A = Alkylen oder Hydroxyalkylen (z. B. mit 1 bis 6 C-Atomen)
$R^5$ = $R^3$ oder Hydroxyalkyl (z. B. mit 1 bis 6 C-Atomen)
D = -COO-, -CONH-, $-CH_2O-$ oder -O- sind.

Beispiele für ungesättigte N-gruppenhaltige Monomere sind N-Dialkyl- oder N-Monoalkylaminoalkyl-(meth)acrylate oder die entsprechenden N-Alkanol Verbindungen wie beispielsweise N-Dimethylaminoethanolacrylamid und/oder Vinylgruppen enthaltende hetero-cyclische Verbindungen mit einem oder mehreren basischen Stickstoffatomen, wie beispielsweise N-Vinylimidazol oder Addukte von Glycidyl(meth)acrylat mit Aminoalkoholen.

Unter radikalisch polymerisierbaren hydroxylgruppenhaltigen Monomeren werden beispielsweise auch solche verstanden, die außer einer polymerisierbaren ethylenisch ungesättigten Gruppe noch mindestens eine Hydroxylgruppen an einem $C_2$ bis $C_{20}$ linearen, verzweigten oder cyclischen Kohlenwasserstoffrest enthalten. Es sind beispielsweise ungesättigte Veresterungsprodukte der allgemeinen Formel

$R^3$ - CH = $CR^3$ - D - B

worin
$R^3$ und D wie vorstehend definiert sind, und
B eine lineare oder verzweigte $C_{1-6}$ Alkylgruppe mit 1 bis 3 OH-Gruppen ist.

Besonders geeignet sind (Meth)acrylsäurehydroxyalkylester wie beispielsweise 2-Hydroxyethylacrylat, 2-Hrdroxypropylmethacrylat, Butandiol-1,4-monoacrylat, 2,3-Dihydroxypropylmethacrylat, Pentaerythritmonomethacrylat, Polypropylenglykolmonoacrylat oder auch Fumarsäuredihydroxyalkylester. Es können jedoch auch N-Hydroxyalky(meth)acrylamid oder N-Hydroxyalkylfumarsäuremono- oder diamide wie beispielsweise N-Hydroxyethylacrylamid oder N-(2-Hydroxypropyl)methacrylamid eingesetzt werden. Besonders elastische Eigenschaften sind beim Einsatz eines Reaktionsprodukts von Hydroxyalkyl(meth)acrylat mit Caprolacton zu erhalten. Andere hydroxylgruppenhaltige Verbindungen sind Allylalkohol, Monovinylether von Polyalkoholen, besonders Diolen wie der Monovinylether des Ethylenglykols oder Butandiols, sowie hydroxylgruppenhaltige Allylether oder -ester, wie 2,3-Dihydroxypropylmonoallylether oder Trimethylpropanmonoallylether.

Ebenfalls ist es möglich, geeignete polyungesättigte Monomere anteilsweise einzusetzen. Es handelt sich dabei z.B. um Reaktionsprodukte aus Polyalkoholen, insbesondere Dialkoholen mit $\alpha$ und $\beta$-ungesättigten Carbonsäuren. Unter ethylenisch polyungesättigten Monomeren werden Verbindungen mit mindestens 2 radikalisch polyerisierbaren Doppelbindungen verstanden.

Beispiele hierfür sind Ethandioldiacrylat, Ethlenglykoldimethylacrylat, 1,4-Butandioldiacrylat, 1,6-Hexandioldiacrylat, Neopentylglykoldimethacrylat, Triethylenglykoldimethacrylat, Polyglykol-400-diacrylat, Glycerindimethacrylat, Trimethylolpropantriacrylat und/oder Pentaerythritdiacrylat. Urethan-und amidgruppenhaltige polyfunktionelle Monomere werden hergestellt durch Reaktionen von beispielsweise Hexandiisocyanat, Methacrylsäure-$\beta$-isocyanatoethylester oder Dimethyl-m-isopropenyltoluylisocyanat mit Hydroxyethyl(meth)-acrylat oder (Meth)acrylsäure. Beispiele für weitere geeignete Verbindungen sind Allylmethacrylat, Diallylphthalat, Butandiolvinylether, Divinylproylenharnstoff, Maleinsäurediallylester, Bismaleinimid, Glyoxa-bisacrylamid und/oder Reaktionsprodukte von Epoxidharz mit (Meth)acrylsäure oder Fumarsäurehalbestern. Bevorzugt wird der Einsatz von difunktionellen ungesättigten Monomeren wie Butandioldiacrylat oder Hexandioldiacrylat. Bei Verwendung von Glycidylmethacrylat und Methacrylsäure entsteht das entsprechende Glycerindimethacrylat automatisch bei der Polymerisation.

In gleicher Weise kann die Reaktion von eingebautem verethertem Alkoxy(meth)acrylamid mit Amid-, Carboxyl- oder Hydroxylgruppen ausgenutzt werden. Die Art und Menge an polyungesättigten Monomeren ist mit den Reaktionsbedingungen (Katalysatoren, Reaktionstemperatur, Lösemittel) sorgfältig abzustimmen, um ein Gelieren zu verhindern.

Die Menge der Monomeren beträgt 10 - 90 Gew.-% bezogen auf das PU-Makromere, bevorzugt 15 - 50 Gew.-%.

Über die Menge der polyungesättigten Monomere ist es möglich, auch vernetzte Reaktionsprodukte zu erhalten. Gemäß einer bevorzugten Ausführungsform können von den radikalisch polymerisierbaren Monomeren, 0,1 bis 7 Gewichtsprozent ersetzt sein durch ethylenisch polyungesättigte Monomere.

Die Copolymerisation erfolgt in bekannter Weise bevorzugt durch Emulsionspolymerisation unter Zusatz von radikalischen Initiatoren, sowie gegebenenfalls Reglern bei erhöhten Temperaturen von z.B. 50 bis 160° C. Sie erfolgt in der Wasserphase in der Monomere und Polymere gemeinsam emulgiert sind. Der

Festkörper des Polymeren nach der Auspolymerisation beträgt dabei etwa 20 bis 65 Gew.-%. Im allgemeinen wird das Gemisch bis zur Reaktionstemperatur erwärmt. Es kann auch das Monomerengemisch während der Reaktion zudosiert werden. Um bei Rückflußtemperatur arbeiten zu können, wird der Initiator auf die Siedetemperatur des Lösemittelgemisches abgestimmt. Als Initiatoren, die in organischen Lösemitteln löslich sind, werden 0,1 bis 5 Gew.-%, bevorzugt 0,5 bis 3 Gew.-% bezogen auf die eingesetzte Monomerenmenge an üblichen Radikalinitiatoren, z. B. wasserlöslichen, bevorzugt wasserunlöslichen Peroxiden und/oder Azo-Verbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid und Perester wie tert.-Butylperoctat oder tert.-Butylperbenzoat. Thermisch zerfallende Azo-Verbindungen sind beispielsweise 2,2'-Azo-bis-(2-cyanopropan) oder 1,1'-Azo-bis-cyclohexancarbonitril. Als Initiatoren können auch radikalbildende Verbindungen vom Dibenzyltyp wie 1,2-Bis-(4-methylphenyl)-1,2-dicarbethoxy-1,2-dicyanoethan verwendet werden. Es ist möglich in Anwesenheit von üblichen Reglern zu arbeiten, durch die die Molmasse in bekannter Weise herabgesetzt werden kann. Bevorzugt werden hierzu Mercaptane, halogenhaltige Verbindungen und andere radikalübertragende Substanzen eingesetzt. Besonders bevorzugt sind n- oder tert.-Dodecylmercaptan, Tetrakismercaptoacetylpentaerythrit, tert.-Butyl-o-thiokresol, Buten-1-ol oder dimeres- Methylstyrol.

Nach der Polymerisation der ungesättigten Monomeren beträgt das Molgewicht über 5000 bevorzugt über 50000 und unter 1000000. Die Säurezahl liegt bevorzugt zwischen 5 bis 90, die OH-Zahl bevorzugt zwischen 5 und 100.

Der Festkörper der Dispersionen kann zwischen 20 % und 65 % betragen. Es können nichtvernetzte Produkte erhalten werden oder es werden vernetzte Mikrogele erhalten. Die Teilchen sind durch ionische Gruppen oder durch nichtionische Gruppen, insbesondere durch anionische Gruppen, stabilisiert.

Die erhaltenen erfindungesgemäßen Dispersionen sind lagerstabile, opaleszierende Dispersionen. Sie zeigen eine niedrige Viskosität und weisen eine gute Verträglichkeit mit anderen Bindemitteln auf. Durch den Kettenaufbau in der Wasserphase können hochmolekulare Bindemitteldispersionen hergestellt werden, ohne dabei Viskositätsprobleme zu erhalten.

Aus den erfindungsgemäßen vernetzten oder nicht vernetzten Dispersionen können wäßrige lösungsmittelarme Überzugsmittel hergestellt werden. Dazu werden den Dispersionen beispielsweise Pigmente, gegebenenfalls weitere Bindemittel, Additive sowie gegebenenfalls geringe Mengen von Lösemitteln zugesetzt.

Die im Überzugsmittel gegebenenfalls vorhandenen zusätzlichen weiteren Bindemittelkomponenten können z.B. wasserverdünnbare Polyesterharze und/oder Polyacrylharze und/oder Polyurethanharze gegebenenfalls Melaminharzen und/oder blockierten Polyisocyanaten als Vernetzer sein. Die Gewichtssumme der weiteren wasserverdünnbaren Bindemittelkomponenten sowie Vernetzern, bezogen auf den Festkörpergehalt der gesamten Bindemittelmischung kann 0 bis 90 Gew.-% bevorzugt über 5 und unter 50 Gew.-% betragen. Es können die üblichen wasserverdünnbaren Bindemittel eingesetzt werden.

Bei Zusatz von weiteren Bindemitteln ist es selbstverständlich, daß zusätzliche ionische stabilisierte Harze und Dispersionen nur zusammen mit gleichartig geladenen erfindungsgemäßen ionischen Dispersionen verwendet werden können, um die Stabilität nicht negativ zu beeinflussen.

Zur Herstellung der erfindungsgemäßen Überzugsmittel können verschiedene Vernetzer, wie beispielsweise Formaldehyd-Kondensationsharze, wie Phenol-Formaldehyd-Kondensationsharze und Amin-Formaldehyd-Kondensationsharze, sowie gegebenenfalls blockierte Polyisocyanate verwendet werden. Die Menge des Vernetzers kann bezogen auf die gesamten Bindemittel z. B. 0 bis 50 Gew.-%, insbesondere über 5 und unter 40 Gew.-% betragen.

Als Vernetzer in Überzugsmitteln können bei der Erfindung beliebige bekannte Polyisocyanate benutzt werden, bei denen die Isocyanatgruppe mit einer Verbindung umgesetzt worden sind, so daß das gebildete blockierte Polyisocyanat gegenüber Hydroxylgruppen und Wasser bei Raumtemperaturen beständig ist. Bevorzugt sind die Isocyanate, die keine Vergilbung bei Witterungseinfluß oder Erwärmung zeigen.

Es können auch nicht-blockierte Isocyanate eingesetzt werden. Diese werden jedoch dem Überzugsmittel erst kurz vor der Applikation zugesetzt. Es handelt sich dann um 2-Komponenten (2K)-Überzugsmittel.

Weiterhin können die Überzugsmittel lacktechnische Additive enthalten, beispielsweise rheologiebeeinflussende Mittel, wie hochdisperse Kieselsäure, Schichtsilikate oder polymere Harnstoffverbindungen. Als Verdicker wirken auch beispielsweise wasserlöslische Celluloseether sowie synthetische Polymere mit ionischen und/oder assoziativ wirkenden Gruppen wie modifizierte ethoxylierte Polyurethane oder Polyacrylate. Daneben können auch Antiabsetzmittel, Verlaufsmittel, Lichtschutzmittel, Antischaummittel, wie beispielsweise silikonhaltige Verbindungen; Netzmittel, z.B. Pastenharze sowie haftvermittelnde Substanzen eingesetzt werden. Zum Beschleunigen der Härtung können gegebenenfalls Katalysatoren eingesetzt werden, es ist jedoch auch möglich durch thermische Energie ohne Einsatz eines Katalysators zu härten.

Als in geringen Mengen vorhandene Lösemittel sind übliche lacktechnische Lösungsmittel geeignet, diese können von der Herstellung der Bindemittel stammen oder werden separat zugegeben.

Über die Auswahl der Lösungsmittel kann der Verlauf, die Verträglichkeit, die Viskosität oder die Haftung des Überzugsmittels beeinflußt werden.

Als Pigmente sind beispielsweise transparente oder deckende anorganische und/oder organische Buntpigmente und/oder Effektpigmente wie z.B. Metallic- oder Perlglanzpigmente geeignet. Die Menge beträgt z. B. 0,5 bis 25 Gew.-% bezogen auf das Überzugsmittel. Es können Mischungen von Effekt-, Farbpigmenten, Farbstoffen oder Füllstoffen eingesetzt werden.

Die erfindungsgemäßen Überzugsmittel können nach an sich bekannten Methoden hergestellt werden. Gegebenenfalls werden der Festkörper, der pH-Wert und die Viskosität des Überzugsmittels in üblicher Weise eingestellt. Es ist darauf zu achten, daß die verwendeten Bestandteile miteinander verträglich sind und eine lagerstabile Überzugsmittelzusammensetzung ergeben.

Der pH-Wert der Überzugsmittel liegt bevorzugt bei 6,5 bis 8. In der Regel weisen die fertigen Überzugsmittel z. B. einen Festkörpergehalt von 10 bis 45 Gew.-% auf, der Gehalt der organischen Lösungsmittel liegt z. B. bei unter 10 Gew.-%, bevorzugt unter 5 Gew.-%, jeweils auf das gesamte Überzugsmittel bezogen.

Die Bindemittel sind besonders für die Herstellung von Überzugsmittel für farbgebende Basisschichten geeignet. Es ist jedoch auch möglich, andere Überzugsmittel z.B. Grundierungen, Füller oder Steinschlagschutzschichten daraus herzustellen. Dabei wird die Auswahl der Pigmente und Additive und ihre Konzentration dem jeweiligen Verwendungszweck angepaßt. Gegebenenfalls können auch Klarlacküberzugmittel hergestellt werden.

Durch die erfindungsgemäßen Dispersionen weisen die Überzugsmittel eine gute Verträglichkeit der Bindemittel auf. Sie zeigen eine hohe Lagerstabilität und führen nicht zu Sedimentation oder Flokkulation im Lack. Sie enthalten keine oder nur geringe Lösemittelmengen und, zeigen dabei gute Verlaufseigenschaften bei der Filmbildung.

Die Erfindung betrifft auch ein Verfahren zur Herstellung eines Mehrschichtüberzuges, bei dem auf ein gegebenenfalls grundiertes Substrat eine farbige Basislackschicht mit dem erfindungsgemäßen Überzugsmittel aufgetragen wird. Diese Basislackschicht wird entweder in der Wärme getrocknet oder es kann naßin-naß auf diese Schicht eine Klarlackschicht aufgetragen werden. Als Klarlack sind grundsätzlich alle bekannten nicht oder transparent pigmentierten Überzugsmittel geeignet. Nach dem Auftragen werden die Klarlackschicht und gegebenenfalls die Basislackschicht bevorzugt gemeinsam in der Wärme getrocknet. Die Temperaturen können beispielsweise bei 20 bis 150° C liegen. Für Reparaturzwecke sind beispielsweise Temperaturen von 20 bis 80° C bevorzugt. Für Zwecke der Serienlackierung sind Temperaturen über 100° C, beispielsweise über 110° C bevorzugt.

Die erfindungsgemäße Mehrschichtlackierung weist eine gute Oberfläche auf. Die Haftung zwischen den Schichten und der Basislackschicht ist gut und zeigt auch bei Belastung im Feuchtraumklime keine Enthaftungsstörungen.

Als Substrate sind Metall- und Kunststoffsubstrate, besonders die in der Automobilindustrie bekannten Substrate geeignet. Die erfindungsgemäßen Überzugsmittel sind jedoch auch hervorragend geeignet zur Lackierung anderer Substrate, insbesondere mineralischer Substrate, wie Beton, Glas, Keramik, Holz, sowie zur Beschichtung von Folien (Kunststoff- und Papierfolien) und zum Herstellen dünner Schichten zum Verkleben von mehreren Substraten.

**Beispiel 1**

**Polyurethandispersion 1:**

518 g eines Polyesters aus Hexandiol, Neopentylglykol, Adipinsäure und Isophthalsäure mit einer Hydroxylzahl von 130 und einer Säurezahl unter 3 und 54 g Dimethylolpropionsäure werden 1 h bei 100°C in Vakuum getrocknet. Danach wird auf 80°C gekühlt und 178 g Isophorondiisocyanat so zugegeben, daß die Reaktionstemperatur 85°C nicht überschreitet. Die Reaktionsmischung wird so lange bei dieser Temperatur gehalten, bis keine freien NCO-Gruppen mehr nachgewiesen werden können. Danach wird mit der Zugabe von 75 g Acetessigester begonnen. Nach beendeter Zugabe wird die Temperatur innerhalb von 1 h auf 140°C gesteigert und bei dieser Temperatur gehalten bis kein Destillat mehr übergeht. Um die Reste an abgespaltenem Alkohol und nicht umgesetzten Acetessigester zu entfernen, wird kurz Vakuum angelegt.

Um das acetessigesterfunktionalisierte Polyurethan in ein Makromer zu überführen, wird zunächst mit 20,2 g Triethylamin neutralisiert und anschließend mit 1221 g vollentsalztem Wasser eine stabile Dispersion

mit einem Festkörper von 40 Gew.-% hergestellt. Zur Funktionalisierung werden 34 g Formaldehydlösung (37 Gew. -%) zugesetzt und 2 h bei 25 - 30 °C gerührt.

| | |
|---|---|
| Säurezahl (mg KOH/g): | 29,5 |
| pH-Wert: | 7,2 |
| Festkörper: (30 min. 150 °C) | 39,5 Gew.-% |

**Beispiel 2**

641 g eines handelsüblichen Polycaprolactondiols mit der Hydroxylzahl 112 und 48,2 g Dimethylolpropionsäure werden 1 h bei 110 °C im Vakuum entwässert. Es wird auf 80 °C gekühlt und 177,6 g Isophorondiisocyanat so zugegeben, daß eine Temperatur von 85 °C nicht überschritten wird. Die Reaktionsmischung wird so lange bei dieser Temperatur gehalten, bis kein freies Isocyanat mehr nachgewiesen werden kann. Die Reaktionsmischung wird auf 100 °C erwärmt und 76 g t-Butyl-acetessigester zugetropft. Die Temperatur wird innerhalb von 1,5 h auf 150 °C erhöht und so lange gehalten, bis kein Destillat mehr übergeht. Um die Reste an t-Butanol und unumgesetzten Edukt zu entfernen, wird Vakuum angelegt.

Danach werden 42,8 g Acetoacetoxyethylmethacrylat eingearbeitet. Es wird mit 19,2 g Methyldiethanolamin neutralisiert. Mit 1383 g vollentsalztem Wasser wird eine feinteilige stabile Dispersion mit einem Festkörper von 40 Gew.-% hergestellt. Dann werden 41 g einer 25 Gew.-%igen Lösung von Glutardialdehyd in Wasser zugesetzt und 2 h bei 25 - 30 °C gerührt.

| | |
|---|---|
| Säurezahl: (mg KOH/g) | 30,1 |
| pH-Wert: | 7,5 |
| Festkörper: (30 min. 150 °C) | 40,3 Gew.-% |

**Beispiel 3**

641 g eines handelsüblichen Polycaprolactondiols mit der Hydroxylzahl 112 und 48,2 g Dimethylolpropionsäure werden 1 h bei 110 °C im Vakuum entwässert. Es wird auf 60 °C gekühlt und 177,6 g Isophorondiisocyanat so zugegeben, daß eine Temperatur von 85 °C nicht überschritten wird. Die Reaktionsmischung wird so lange bei dieser Temperatur gehalten, bis kein freies Isocyanat mehr nachgewiesen werden kann. Die Reaktionsmischung wird auf 100 °C erwärmt und 76 g t-Butyl-acetessigester zugetropft. Die Temperatur wird innerhalb von 1,5 h auf 150 °C erhöht und so lange gehalten, bis kein Destillat mehr übergeht. Um die Reste an t-Butanol und unumgesetzten Edukt zu entfernen, wird Vakuum angelegt.

Es wird mit 19,2 g Methyldiethanolamin neutralisiert. Mit 1383 g vollentsalztem Wasser wird eine feinteilige stabile Dispersion mit einem Festkörper von 40 Gew.-% hergestellt. Zur Kettenverlängerung werden 40 g N-(4,4'-Dimethoxybutyl)methacrylamid zugesetzt und 4 h gerührt.

Anschließend werden 10 g eines handelsüblichen Radikalinitiators (Trogonox 21 S) zugesetzt und 3 h bei 80 °C gerührt. Analytische Kenndaten:

| | |
|---|---|
| Säurezahl: (mg KOH/g) | 29,4 |
| pH-Wert: | 7,4 |
| Festkörper: (30 min. 150 °C) | 41,2 Gew.-% |

**Beispiel 4**

Das Acetourethan wird analog dem Beispiel 2 synthetisiert. Neben dem Acetoacetoxyethylmethacrylat werden noch weitere Monomere eingesetzt, die zusammen in die Harzphase eingebracht werden:

1. 40,0 g Styrol
2. 50,0 g Methylmethacrylat
3. 30,0 g Butylacrylat

Danach wird mit 19,2 g Methyldiethanolamin neutralisiert. Mit 1544 g vollentsalztem Wasser wird eine

feinteilige Dispersion mit einem Festkörpergehalt von 40 Gew.-% hergestellt. Zur Herstellung des Makromeren (durch Kettenverlängerung) werden 21,6 g einer 37 % (Gew.-%) Formaldehydlösung zugegeben und 3 h bei 30 °C gerührt. Die Copolymerisation wird mit 10 g eines handelsüblichen Radikalinitiators (tert.-Butylperoctoat) bei 80 °C gestartet. Nach 4 h Reaktionszeit erhält man eine nahezu monomerenfreie Polyurethan-Acryl-Dispersion.

| | |
|---|---|
| Säurezahl: (mg KOH/g<br>pH-Wert:<br>Festkörper: (30 min. 150 °C) | 20,1<br>7,2<br>40,1 Gew.-% |

**Beispiel 5**

Das Polyurethanharz wird analog Beispiel 4 gearbeitet. Die Comonomere Styrol, Methylmethacrylat und Butylacrylat werden nicht der Harzphase, sondern der wäßrigen Dispersion zugesetzt und anschließend einer Copolymerisation unterzogen.

| | |
|---|---|
| Säurezahl: (mg KOH(g)<br>pH-Wert:<br>Festkörper: | 20,2<br>7,2<br>40,0 Gew.-% |

**Beispiel 6**

Es wird analog Beispiel 4 gearbeitet. Als Comonomere werden zusammen mit dem Acetoacetoxyethylmethacrylat 40 g Butylacrylat und 20 g Butandiolmonoacrylat und 10 g Hydroxyethylmethacrylat in das Harz eingearbeitet.

Nach der Dispersionsbildung und Funktionalisierung schließt eine Copolymerisation wie in Beispiel 4 an.

Analytische Kennwerte:

| | |
|---|---|
| Säurezahl (mg KOH/g)<br>pH-Wert:<br>Festkörper: (30 min. 150 °C) | 21,4<br>7,4<br>41,7 Gew.-% |

**Beispiel 7**

Es wird analog Beispiel 3 gearbeitet. In die wäßrige Dispersion wird eine Mischung aus 50 g Butylacrylat, 20 g Butandioldiacrylat, 30 g Methylmethacrylat sowie 40 g Stryrol eingearbeitet. Die Copolymerisation wird wie in Beispiel 4 durchgeführt. Es entsteht eine vernetzte PU-Acryldispersion.

| | |
|---|---|
| Säurezahl:<br>pH-Wert:<br>Festkörper: | 21,2<br>7,3<br>42,1 Gew.-% |

**Beispiel 8**

Es wird gearbeitet wir in Beispiel 1. Nach der Funktionalisierung mit 34 g Formaldehydlösung werden zu dem erhaltenen Makromonomeren 10 g eines handelsüblichen Radikalinitiators, tert.-Butylperoctoat, zugesetzt und es wird auf 80 °C erhitzt. Nach 4 Stunden Reaktionszeit bei dieser Temperatur erhält man ein Homopolymerisat in Form einer Dispersion mit folgenden Kenndaten:

| | |
|---|---|
| Säurezahl (mg KOH/g) | 29,5 |
| pH-Wert | 7,4 |
| Festkörper (30 min., 150 ° C) | 39,5 Gew.-%. |

## Patentansprüche

**1.** Wäßrige Dispersion Von Polyurethanharzen, die erhältlich ist aus

a) einem oder mehreren Polyurethanharzen, die mindestens eine CH-acide Gruppe, mindestens eine ionische Gruppe, in eine ionische Gruppe überführbare Gruppe und/oder nicht-ionische hydrophile Gruppe, sowie gegebenenfalls OH- und/oder NH-Gruppen enthalten, durch

b) Einführung von einer oder mehreren olefinischen Doppelbindungen durch Umsetzung mit

$b_1$) einer oder mehreren Verbindungen, die eine CH-acide Gruppe und eine olefinische Doppelbindung enthalten mit der allgemeinen Formel

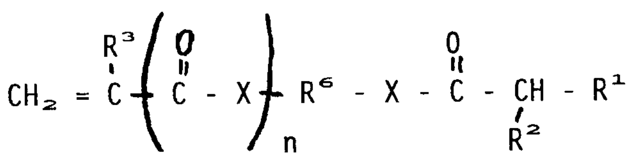

VI.

n = 0 oder 1,
X = 0 oder NH, wobei die Gruppen X gleich oder verschieden sein können,
$R^1$ = H, $C_1$ - $C_6$-Alkyl, -$COOR^3$,
$R^2$ = -CN, -$COOR^3$, -$CONR^3_2$,

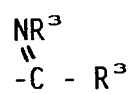

$R^3$ = H, lineares oder verzweigtes $C_1$ - $C_8$-Alkyl, wobei die Reste $R^3$ gleich oder verschieden sein können,
$R^6$ = Alkylen, Cycloalkylen, Arylen oder Alkylarylen, insbesondere mit $C_1$ bis $C_{12}$,
und/oder

$b_2$) einer oder mehreren Verbindungen, die eine olefinische Doppelbindung sowie eine mit CH-aciden Gruppen reaktionsfähige Gruppe enthalten mit der allgemeinen Formel VII

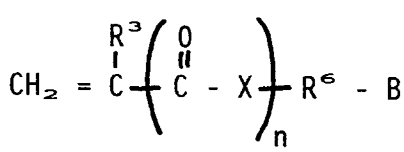

VII.

n = 0 oder 1
B = NCO, CHO, $CH(OR)_2$,

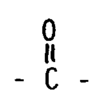

$R^6$, X, $R^3$ = wie unter $b_1$) definiert,
R = Alkyl mit $C_1$ bis $C_6$,
und/oder

$b_3$) einer oder mehreren Verbindungen die eine olefinische Doppelbindung sowie eine Gruppe, die mit -OH oder -NH Gruppen reaktionsfähig ist, enthalten, mit der allgemeinen Formel VIII

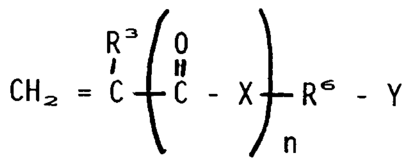

VIII

mit n, $R^3$, X, $R^6$ = wie unter $b_1$) definiert und
Y = Isocyanat oder Epoxidgruppe,
und/oder
$b_4$) Formaldehyd,

in wäßriger oder nicht-wäßriger Phase worauf ein noch nicht in wäßriger Phase vorliegendes Reaktionsprodukt von a) und b) in die wäßrige Phase überführt und in der wäßrigen Phase radikalisch polymerisiert wird, gegebenenfalls zusammen mit einem oder mehreren radikalisch polymerisierbaren ungesättigten Monomeren, gebenenfalls in Anwesenheit von üblichen Additiven.

**2.** Verfahren zur Herstellung der wäßrigen Dispersionen von Polyurethanharzen nach Anspruch 1, gekennzeichnet durch Umsetzung in wäßriger oder nicht-wäßriger Phase von

a) einem oder mehreren Polyurethanharzen, die mindestens eine CH-acide Gruppe, mindestens eine ionische Gruppe, in eine ionische Gruppe überführbare Gruppe und/oder nicht-ionische hydrophile Gruppe, sowie gegebenenfalls OH- und/oder NH-Gruppen enthalten, zur Einführung von einer oder mehreren olefinischen Doppelbindungen mit

$b_1$) einer oder mehreren Verbindungen, die eine CH-acide Gruppe und eine olefinische Doppelbindung enthalten, wie in Anspruch 1 definiert, und/oder

$b_2$) einer oder mehreren Verbindungen, die eine olefinische Doppelbindung sowie eine mit CH-aciden Gruppen reaktionsfähige Gruppe enthalten, wie in Anspruch 1 definiert, und/oder

$b_3$) einer oder mehreren Verbindungen, die eine olefinische Doppelbindung sowie eine Gruppe, die mit -OH oder -NH Gruppen reaktionsfähig ist, enthalten, wie in Anspruch 1 definiert, und/oder

$b_4$) Formaldehyd,

worauf ein noch nicht in wäßriger Phase vorliegendes Reaktionsprodukt von a) und b) in die wäßrige Phase überführt und in der wäßrigen Phase radikalisch polymerisiert wird, gegebenenfalls zusammen mit einem oder mehreren radikalisch polymerisierbaren ungesättigten Monomeren, gegebenenfalls in Anwesenheit von üblichen Additiven.

**3.** Dispersion oder Verfahren nach Anspruch 1 oder 2, worin die Polyurethanharze a) vor oder während der Einführung von olefinischen Doppelbindungen, zur Kettenverlängerung umgesetzt werden mit

c) mindestens einer Verbindung, die mit mindestens zwei CH-aciden Gruppen reagieren kann.

**4.** Dispersion oder Verfahren nach Anspruch 1, 2 oder 3, worin die Polyurethanharze der Komponente a) erhältlich sind durch Umsetzung von

A) einem oder mehreren, Hydroxylgruppen enthaltenden Polyurethanharzen, die Harnstoffgruppierungen enthalten können, mit mindestens einer ionischen Gruppen, zur Ionenbildung befähigten Gruppe und/oder hydrophilen Gruppe pro Molekül und einer OH-Zahl von 10 bis 150, in wasserfreiem Milieu, mit

B) einer oder mehreren Verbindungen, die mindestens eine zur Reaktion mit mindestens einem Teil der OH-Gruppen der Polyurethanharze A geeignete funktionelle Gruppe aufweisen und außerdem mindestens eine CH-acide Gruppe enthalten.

**5.** Dispersion oder Verfahren nach einem der vorhergehenden Ansprüche, dadurch gekennzeichnet, daß die Polyurethanharze anionisch stabilisiert sind.

**6.** Dispersion oder Verfahren nach einem der vorhergehenden Ansprüche, dadurch gekennzeichnet, daß die Polyurethanharze nicht vernetzt sind.

7. Dispersion oder Verfahren nach einem der Ansprüche 1 bis 5, dadurch gekennzeichnet, daß die Polyurethanharze ganz oder teilweise in Form vernetzter Mikrogele vorliegen.

8. Dispersion oder Verfahren nach einem der vorhergehenden Ansprüche, dadurch gekennzeichnet, daß die Polyurethanharze aus 15 bis 50 Gew.-% der ungesättigten polymerisierbaren Monomeren und 85 bis 50 Gew.-% des Reaktionsprodukts aus a), b) und gegebenenfalls c) (Polyurethanmakromonomer) erhalten werden.

9. Dispersion oder Verfahren nach einem der vorhergehenden Ansprüche, dadurch gekennzeichnet, daß die Polyurethanharze eine Säurezahl von 5 bis 90, eine OH-Zahl von 5 bis 100 und ein Zahlenmittel der Molmasse (Mn) über 50000 aufweisen.

10. Dispersion oder Verfahren nach einem der vorhergehenden Ansprüche, dadurch gekennzeichnet, daß die Umsetzung mit den Komponenten $b_2$) oder $b_3$) in der organischen Phase erfolgt.

11. Dispersion oder Verfahren nach einem der Ansprüche 1 bis 9, dadurch gekennzeichnet, daß die Umsetzung mit den Komponenten $b_1$), $b_2$) oder $b_4$) in der Wasserphase erfolgt.

12. Dispersion oder Verfahren nach einem der vorhergehenden Ansprüche, dadurch gekennzeichnet, daß die Kettenverlängerung mit c) gleichzeitig mit der Umsetzung mit b) erfolgt.

13. Dispersion oder Verfahren nach Anspruch 12, dadurch gekennzeichnet, daß die Kettenverlängerung mit c) in der Wasserphase erfolgt.

14. Dispersion oder Verfahren nach einem der vorhergehenden Ansprüche, dadurch gekennzeichnet, daß die polymerisierbaren ungesättigten Monomeren in der organischen Phase zudosiert werden.

15. Dispersion oder Verfahren nach einem der Ansprüche 1 bis 13, dadurch gekennzeichnet, daß die polymerisierbaren ungesättigten Monomeren in der Wasserphase zugesetzt werden.

16. Polyurethanmakromonomer, erhältlich durch Umsetzung in wäßriger oder nicht-wäßriger Phase von
   a) einem oder mehreren Polyurethanharzen, die mindestens eine CH-acide Gruppe, mindestens eine ionische Gruppe, in eine ionische Gruppe überführbare Gruppe und/oder nicht-ionische hydrophile Gruppe, sowie gegebenenfalls OH und/oder NH-Gruppen enthalten, durch
   b) Einführung von einer oder mehreren olefinischen Doppelbindungen durch Umsetzung mit
   $b_1$) einer oder mehreren Verbindungen, die eine CH-acide Gruppe und eine olefinische Doppelbindung enthalten, wie in Anspruch 1 definiert und/oder
   $b_2$) einer oder mehreren Verbindungen, die eine olefinische Doppelbindung sowie eine mit CH-aciden Gruppen reaktionsfähige Gruppe enthalten, wie in Anspruch 1 definiert, und/oder
   $b_3$) einer oder mehreren Verbindungen, die eine olefinische Doppelbindung sowie eine Gruppe, die mit -OH oder -NH-Gruppen reaktionsfähig ist, wie in Anspruch 1 definiert, enthalten und/oder
   $b_4$) Formaldehyd.

17. Polyurethanmakromonomer nach Anspruch 16, dadurch gekennzeichnet, daß man die Polyurethanharze a) vor oder während der Einführung von olefinischen Doppelbindungen, zur Kettenverlängerung umsetzt mit
   c) mindestens einer Verbindung, die mit mindestens zwei CH-aciden Gruppen reagieren kann,
   worauf ein noch nicht in wäßriger Phase enthaltenes Reaktionsprodukt von a), b) und c) in die wäßrige Phase überführt werden kann.

18. Polyurethanmakromonomer nach Anspruch 17, dadurch gekennzeichnet, daß die Komponente c) und die Komponente $b_4$) gleich sind.

19. Verwendung der Polyurethanmakromonomeren nach einem der Ansprüche 16 bis 18 zur Umsetzung mit einem oder mehreren radikalisch polymerisierbaren ungesättigten Monomeren.

20. Wäßriges Überzugsmittel, enthaltend eine wäßrige Polyurethanharzdispersion gemäß einem der Ansprüche 1 und 3 bis 15, mit einem oder mehreren üblichen Vernetzungsmitteln und gegebenenfalls

einem oder mehreren Lösemitteln und/oder lacküblichen Additiven.

**21.** Wäßriges Überzugsmittel nach Anspruch 20, dadurch gekennzeichnet, daß die Polyurethanharze der wäßrigen Polyurethanharzdisperion in Form von unvernetzten Teilchen vorliegen oder solche enthalten.

**22.** Wäßriges Überzugsmittel nach Anspruch 20, dadurch gekennzeichnet, daß die Polyurethanharze der wäßrigen Polyurethanharzdispersion in Form von vernetzten Mikroteilchen vorliegen oder solche enthalten.

**23.** Überzugsmittel nach einem der Ansprüche 20 bis 22, enthaltend zusätzlich ein oder mehrere weitere Bindemittel in einer Menge bis zu 90 Gew.-% bezogen auf die Summe der Festkörpergewichte sämtlicher Bindemittel (Polyurethanharze + zusätzliche Bindemittel).

**24.** Verwendung der wäßrigen Polyurethanharzdisperion nach einem der Ansprüche 1 und 3 bis 15, in wäßrigen Überzugsmitteln.

**25.** Verwendung der wäßrigen Überzugsmittel nach einem der Ansprüche 20 bis 23 als Basislacke in Mehrschichtlackierungen.

**26.** Verwendung der wäßrigen Überzugsmittel nach einem der Ansprüche 20 bis 23 für die Serienlackierung und die Reparaturlackierung industrieller Gegenstände, sowie von Kraftfahrzeugen und deren Teilen.

Europäisches Patentamt

# EUROPÄISCHER RECHERCHENBERICHT

Nummer der Anmeldung
EP 95 10 2475

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 552 469 (REICHHOLD CHEMICALS)<br>* Seite 2, Zeile 50 - Seite 4, Zeile 50; Ansprüche 1-10; Beispiel 24 *<br>--- | 1 | C08G18/83<br>C08F283/00 |
| A | EP-A-0 390 370 (ICI)<br>* Seite 2, Zeile 12 - Seite 6, Zeile 39; Ansprüche *<br>--- | 1 | |
| A | EP-A-0 135 909 (HERBERTS)<br>* Seite 3, Zeile 25 - Seite 14, Zeile 21; Ansprüche; Beispiel 1 *<br>--- | 1 | |
| D,A | DE-A-19 53 349 (BAYER)<br>----- | | |
| | | | RECHERCHIERTE SACHGEBIETE (Int.Cl.6) |
| | | | C08G<br>C08F |

Der vorliegende Recherchenbericht wurde für alle Patentansprüche erstellt

| Recherchenort | Abschlußdatum der Recherche | Prüfer |
|---|---|---|
| DEN HAAG | 22. Mai 1995 | Bourgonje, A |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument